# EUROPÄISCHE PATENTSCHRIFT

(11) **EP 3 524 385 B1**
(45) Veröffentlichungstag und Bekanntmachung des Hinweises auf die Patenterteilung: **23.11.2022**
(21) Anmeldenummer: 19155742.0
(22) Anmeldetag: 06.02.2019
(51) Int. Cl.: B23Q 1/00, B23Q 17/00

(54) **SPANNMODUL, INSBESONDERE NULLPUNKTSPANNMODUL**
CLAMPING UNIT IN PARTICULAR ZERO POINT CLAMPING UNIT
MODULE DE SERRAGE, EN PARTICULIER MODULE DE SERRAGE AU POINT ZÉRO

(30) Priorität: 07.02.2018 DE 102018102747
(43) Veröffentlichungstag der Anmeldung: 14.08.2019
(73) Patentinhaber: Schunk GmbH & Co. KG Spann- und Greiftechnik, 74348 Lauffen am Neckar (DE)
(72) Erfinder: Wild, Marc, 72505 Krauchenwies (DE)
(74) Vertreter: DREISS Patentanwälte PartG mbB

(56) Entgegenhaltungen:
- EP-A1- 1 849 556
- EP-A2- 2 371 478
- DE-A1- 3 212 759

## Beschreibung

Die Erfindung betrifft ein stationäres Spannmodul, insbesondere ein Nullpunktspannmodul, mit einem Grundkörper, der eine Oberseite und eine an oder in der Oberseite vorgesehene Spannaufnahme zur Aufnahme eines Spannelements aufweist. Ferner ist wenigstens ein im Grundkörper senkrecht zu einer Spannachse bewegbares Verriegelungselement zum Einziehen des Spannelements in eine Einzugsrichtung und zur Verriegelung des Spannelements am Grundkörper vorgesehen. Als Verriegelungselemente können insbesondere Spannschieber oder Kugelelemente Verwendung finden.

Ein solches Nullpunktspannmodul ist beispielsweise aus der EP 1 707 307 B1, der EP 2 363 225 B1 oder der DE 10 2010 007 924 A1 bekannt. Ein Nullpunktspannmodul mit Merkmalen des Oberbegriffs des Patentanspruchs 1 ist aus der EP 2 371 478 A2 bekannt.

Die am oder im Spannmodul verriegelbaren Spannelemente können beispielsweise als ein Spannbolzen oder auch als ein Spannring ausgebildet und beispielsweise an einem zu bearbeitenden Werkstück oder einem Werkstückträger vorgesehen sein. Das jeweilige Spannelement wird zum positionsgenauen Spannen und zum anschließenden Bearbeiten an dem Spannmodul verriegelt. Bei Nullpunktspannmodulen handelt es sich um stationäre Spannmodule, mit denen zu bearbeitende Werkstücke oder Werkstückträger wiederholbar positionsgenau gespannt werden können. Dabei ist denkbar, mehrere Spannmodule auf einem gemeinsamen Träger, beispielsweise auf einem Spanntisch oder einer Spannplatte vorzusehen, um insbesondere auch größere Werkstücke mittels mehreren Spannelementen zu spannen.

Die Spannaufnahme sowie die zugehörigen Spannelemente können dabei, um einen konzentrischen Einzug zu gewährleisten, konusflächige Angriffsabschnitte aufweisen, gegen welche die Spannmittel der Spannmodule wirken.

Aus der DE 10 2006 038 499 A1 ist eine Bearbeitungsmaschine mit einem im Betrieb rotierenden Spindelkopf einer Arbeitsspindel bekannt, bei der Dehnmessstreifen auf dem Spindelkopf angeordnet sind.

Der vorliegenden Erfindung liegt die Aufgabe zugrunde, ein stationäres Spannmodul bereitzustellen, bei dem der Verriegelungsvorgang, und damit das Spannen des Spannelements am Grundkörper sicher überprüft werden kann.

Diese Aufgabe wird durch ein stationäres Spannmodul mit den Merkmalen des Anspruchs 1 gelöst. Folglich ist insbesondere vorgesehen, dass am Grundkörper wenigstens in oder an der Oberseite axial oberhalb jedes Verriegelungselements eine Dehnmesseinrichtung zur Messung einer aus der Verriegelung des Spannelements am Grundkörper resultierenden Verformung des Grundkörpers vorgesehen sind und dass im oder am Grundkörper eine Elektronikeinheit zur Verstärkung und/oder Auswertung der Messsignale der Dehnmesseinrichtungen vorgesehen ist.

Beim Verriegeln des Spannelements am Grundkörper wirken aus der Verriegelungskraft resultierende Reaktionskräfte auf den Grundkörper, welche eine, wenn auch vergleichsweise kleine, Verformung des Grundkörpers bewirken. Diese Verformung kann mittels den Dehnmesseinrichtungen gemessen werden. Aus dem Messergebnis kann folglich auf diese Reaktionskräfte, und damit auf die tatsächliche Spannkraft rückgeschlossen werden. Es kann folglich bestimmt werden, ob das Spannelement mit einer vorgegebenen Verriegelungskraft gegen den Grundkörper wirkt und ob die Verriegelung des Spannelements am Grundkörper in einer vorgesehenen Art und Weise erfolgt. Es kann damit ein unerwünschter Kraftverlust oder ein sonstiger Defekt auf einfache Art und Weise festgestellt werden.

Es können mehrere Dehnmesseinrichtungen vorgesehen sein, die als handelsübliche Dehnmessstreifen ausgebildet sein können. Das Vorsehen mehrerer Dehnmesseinrichtungen an unterschiedlichen Stellen des Grundkörpers hat den Vorteil, dass eine ungleichmäßige Verformung des Grundkörpers, und damit eine nicht korrekte Verriegelung und gegebenenfalls ein Verkanten des Spannelements am Grundkörper leicht detektiert werden kann.

Die Ausgangssignale der Elektronikeinheit können über geeignete Kontakte, die insbesondere auf der Unterseite des Grundkörpers vorgesehen sind, einer übergeordneten Steuerung zugeführt werden.

Vorteilhafterweise weist der Grundkörper einen die Spannaufnahme begrenzenden Zentrierkonus für einen am Spannelement vorgesehenen Gegenkonus auf. Beim aufeinander zu bewegen von Grundkörper und Spannelement kann dadurch ein sicheres, gegenseitiges Zentrieren erreicht werden.

Die Dehnmesseinrichtungen sind in oder der Oberseite des Grundkörpers angeordnet. Beim Spannvorgang kann dadurch ein Aufbäumen der Oberseite des Grundkörpers aufgrund der auf den Grundkörper wirkenden Reaktionskräfte detektiert und bestimmt werden. Die Oberseite des Grundkörpers ist gut zugänglich und eignet sich zum Anbringen der Dehnmesseinrichtungen.

Dabei kann vorteilhafterweise an der Oberseite des Grundkörpers eine Ausnehmung zum Einsetzen der Dehnmesseinrichtungen vorgesehen sein. Vorteilhafterweise sind mehrere Ausnehmungen oder eine entsprechend große Ausnehmung zum Einsetzen von mehreren Dehnmesseinrichtungen vorgesehen.

Um die Dehnmesseinrichtungen vor Umwelteinflüssen zu schützen, ist vorteilhaft, wenn eine Abdeckscheibe vorgesehen ist.

Ferner ist vorteilhaft, wenn der Grundkörper auf der der Oberseite abgewandten Seite der Dehnmesseinrichtungen Verformausnehmungen aufweist. Die Verformausnehmungen sind vorteilhafterweise so, dass eine Verformbarkeit des Grundkörpers bei einer Verriegelung des Spannelements am Grundkörper in einem für die jeweilige Dehnmesseinrichtung messbaren Umfang gegeben ist. Die Verformausnehmungen können sich in radialer Richtung, also die Spannachse schneidend, oder in tangentialer Richtung, also die Spannachse nicht schneidend, erstrecken.

Die jeweilige Verformausnehmung kann ein Druckluftkanal sein, der im Grundkörper vorgesehen ist. Der jeweilige Druckluftkanal kann dabei beispielsweise in quer zur Spannachse verlaufender Richtung in der Mantelfläche des Grundkörpers münden. Bei nicht am Grundkörper vorgesehenem Spannelement kann über einen derartigen Druckluftkanal ein Freiblasen der Umgebung des Spannmoduls erfolgen.

Die Verformausnehmungen können auch als quer zur Spannachse verlaufender Einstich ausgebildet sein. Hierdurch kann eine gezielte elastische Verformung eines Abschnitts des Grundkörpers und ein Aufbäumen der Oberseite des Grundkörpers erreicht werden.

Vorteilhafterweise sind die Dehnmesseinrichtungen um die Spannachse herum angeordnet. Die Anordnung ist vorzugsweise symmetrisch, wobei insbesondere jeweils benachbarte Dehnmesseinrichtungen jeweils einen gleichen Winkel einschließen. Vorteilhaft sind insbesondere vier oder sechs Dehnmessstreifen, die um die Spannachse herum auf der Oberseite des Grundkörpers im Bereich des Spannkonus angeordnet. Dadurch kann ein Aufbäumen der Oberseite des Grundkörpers in einer Ebene senkrecht zur Spannachse detektiert werden.

Wie bereits angesprochen, kann vorgesehen sein, dass die Spannaufnahme als Ausnehmung und das Spannmittel als ein in die Spannaufnahme eingreifender Bolzen ausgebildet sind. Andererseits ist denkbar, dass die Spannaufnahme als Erhebung, beispielsweise in Form eines Spannkopfes, ausgebildet ist und dass das Spannmittel als ein die Erhebung bzw. den Spannkopf umgebender Spannring ausgebildet ist.

Weitere Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind.

Es zeigen:
- Figur 1: ein erfindungsgemäßes Spannmodul in perspektivischer Ansicht;
- Figur 2: das Spannmodul gemäß Figur 1 in Draufsicht;
- Figur 3: eine teilweise freigeschnittene Seitenansicht des Spannmoduls gemäß Figur 2 mit einem am Grundkörper des Spannmoduls verriegelten Spannelement;
- Figur 4: die Vergrößerung des in Figur 3 freigeschnittenen Bereiches;
- Figur 5: eine Abdeckscheibe gemäß Figur 3 und 4 in Einzelteildarstellung;
- Figur 6: einen Ausschnitt der Unteransicht des Spannmoduls gemäß Figur 3;
- Figur 7: ein zweites erfindungsgemäßes Spannmodul in perspektivischer Ansicht;
- Figur 8: das Spannelement zum Verriegeln am Spannmodul gemäß Figur 7; und
- Figur 9: einen Ausschnitt eines Längsschnitts durch das Spannmodul gemäß Figur 7

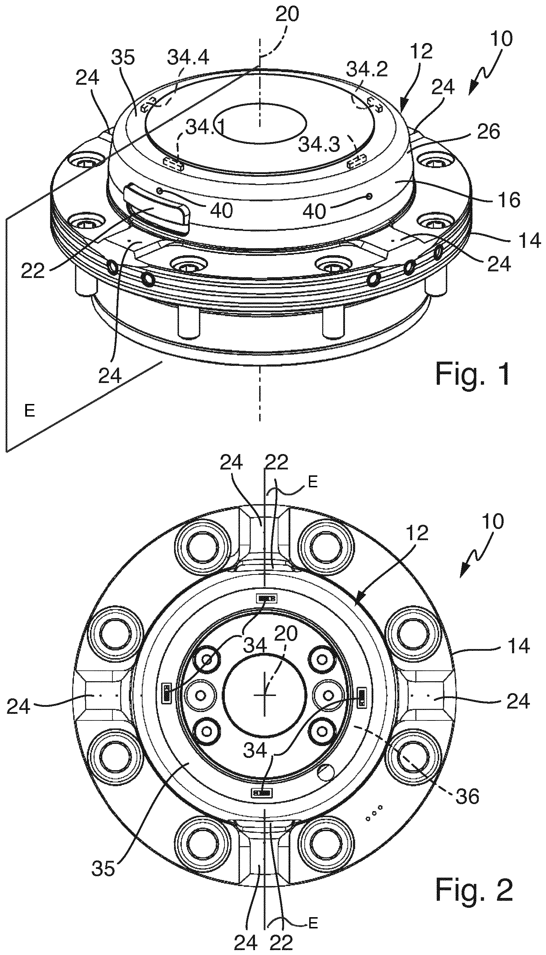

In den Figuren 1 bis 3 ist ein Spannmodul 10 gezeigt, das einen Grundkörper 12 aufweist, an dem ein umlaufender Flanschabschnitt 14 zur Befestigung des Spannmoduls 10 an beispielsweise einer Trägerplatte vorgesehen ist.

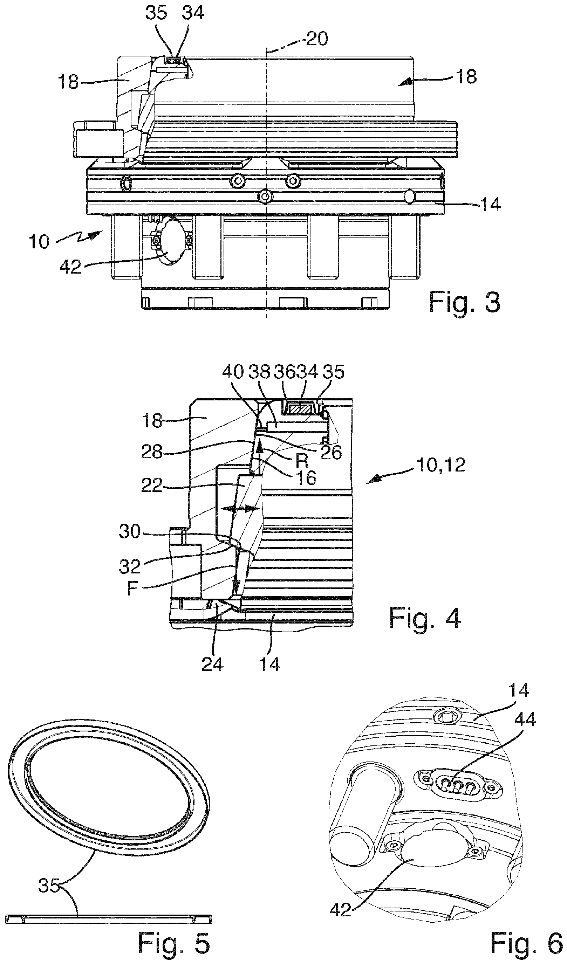

An der Oberseite des Grundkörpers 12 ist eine spannkopfartige Erhebung vorgesehen, die eine Spannaufnahme 16 zur Aufnahme eines ringartig ausgebildeten Spannelements 18, das in den Figuren 3 und 4 dargestellt ist, bildet. Im Grundkörper 12 sind ferner zwei in radialer Richtung, senkrecht zu einer Spannachse 20 verlagerbare Verriegelungselemente 22 vorgesehen.

Auf der Oberseite des Flanschabschnitts 14 sind insgesamt vier Auflageabschnitte 24 zur Auflage des am Spannmodul 10 gespannten Spannelements 18 vorgesehen.

Wie aus der Figur 3, und insbesondere aus der Vergrößerung gemäß Figur 4 deutlich wird, weist der Grundkörper 12 bzw. die Mantelfläche des Grundkörpers 12 einen Zentrierkonus 26 auf. Dem Zentrierkonus 26 gegenüberliegend ist am Spannelement 18 ein Gegenkonus 28 vorgesehen. Durch Vorsehen der Konusse 26, 28 wird das Spannelement 18 beim Aufsetzen auf das Spannmodul 10, bzw. auf die Spannaufnahme 16 zentriert.

Werden in einem nächsten Schritt die Verriegelungselemente 22 nach radial außen verlagert, so wirken Einzugsschrägen 30 der Verriegelungselemente 22 mit Einzugsabschnitten 32 des Spannelements 18 derart zusammen, dass das Spannelement 18 aufgrund einer Einzugskraft F in Einzugsrichtung hin gegen die Auflageabschnitten 24 gezogen werden und weiter das Spannelement 18 am Grundkörper 12 verriegelt wird. Gleichzeitig wirken am Grundkörper 12 der Einzugskraft F entgegen gerichtete Reaktionskräfte R. Aufgrund dieser Reaktionskräfte R kommt es zu einer geringfügigen Verformung des Grundkörpers, die insbesondere in einem Aufbäumen an der Oberseite des Grundkörpers 12 resultiert. Zur Messung dieser Verformung sind am Grundkörper 10 insgesamt vier Dehnmesseinrichtungen 34 vorgesehen. Je größer die Reaktionskräfte R sind, desto größer ist die Verformung des Grundkörpers 12. Aus der Größe der gemessenen Verformung kann folglich auf die Reaktionskräfte R rückgeschlossen werden. Da die Reaktionskräfte R an insgesamt vier Stellen über die Dehnmesseinrichtungen 34 bestimmt wird, kann ermittelt werden, ob ein über den Umfang des Grundkörpers 12 gleichmäßiges, und damit korrektes Spannen erfolgt oder ob ein Kraftverlust bzw. Defekte beim und während des Verriegelns auftreten.

Aus Figur 1 wird deutlich, dass am Grundkörper 12 wenigstens in oder an der Oberseite des Grundkörpers 12 axial oberhalb jedes Verriegelungselements 22 jeweils eine Dehnmesseinrichtung 34.1 und 34.2 vorgesehen ist. Zwischen den Messeinrichtungen 34.1 und 34.2 sind zwei weitere Messeinrichtungen 34.3 und 34.4 vorgesehen. Jedem Verriegelungselement 22 sowie jeder dem jeweiligen Verriegelungselement 22 zugehörigen Dehnmesseinrichtung 34.1 und 34.2 ist ein Auflageabschnitte 24 zugeordnet, so dass das jeweilige Verriegelungselement 22, die zugehörige Dehnmesseinrichtung 34.1, 34.2 und der zugeordnete Auflageabschnitte 24 in einer durch die Spannachse 20 verlaufenden, in der Figur 1 angedeuteten Schnittebene E liegen. Die beiden Messeinrichtungen 34.3 und 34.4 liegen ebenfalls in einer durch die Spannachse 20 verlaufenden Schnittebene, wobei die zugehörigen Auflageabschnitte 24 ebenfalls in dieser Schnittebene liegend angeordnet sind.

Wie aus Figur 4 deutlich wird, sind die Dehnmesseinrichtungen 34 in bzw. an der Oberseite des Grundkörpers 12 nahe der Oberfläche des Zentrierkonus 26 angeordnet. Die Oberseite des Grundkörpers 12 sieht dabei eine ringförmige Ausnehmung 36 vor, innerhalb welcher die Dehnmesseinrichtungen 34 angeordnet sind. Ferner ist eine Abdeckscheibe 35, die in Figur 5 als Einzelteil dargestellt ist, vorgesehen, die die Dehnmesseinrichtungen 34 schützend abdeckt.

Wie ebenfalls aus Figur 4 deutlich wird, ist axial unterhalb der Dehnmesseinrichtungen 34 eine Verformausnehmung 38 in Form eines Druckluftkanals vorgesehen. Die Verformausnehmungen liegen dabei ebenfalls in der jeweiligen Schnittebene E. Die jeweilige Verformausnehmung 38 weist an der Mantelfläche des Zentrierkonus 26 eine Mündung 40 auf. Bei abgenommenem Spannelement 18 kann bei Druckbeaufschlagung der Verformausnehmung 38 ein Freiblasen des Zentrierkonus 26 und der Auflageabschnitte 24 erfolgen. Dadurch, dass die Dehnmesseinrichtungen 34 oberhalb der Verformausnehmung 38 angeordnet sind, kann sich dennoch die Oberseite des Grundkörpers 12 im Bereich oberhalb der Verformausnehmung 38 bzw. der Mündung 40 sich verformen. Alternativ oder zusätzlich können weitere Einstiche im Grundkörper 12 vorgesehen sein, um eine definierte Verformung des Grundkörpers 12 dort zuzulassen, wo die Dehnmesseinrichtungen 34 vorgesehen sind.

Im Grundkörper 10 ist ferner eine Elektronikeinheit 42 vorgesehen, die im Ausschnitt gemäß Figur 6 deutlich zu erkennen ist. Die von den Dehnmesseinrichtungen 34 detektierten Messsignale werden in der Elektronikeinheit 42 verstärkt und/oder ausgewertet. Ferner sind an der Unterseite des Flanschabschnitts 14 Kontaktstellen 44 vorgesehen, mit denen die von der Elektronikeinheit 42 erzeugten Signale an eine übergeordnete Steuerung geleitet werden können.

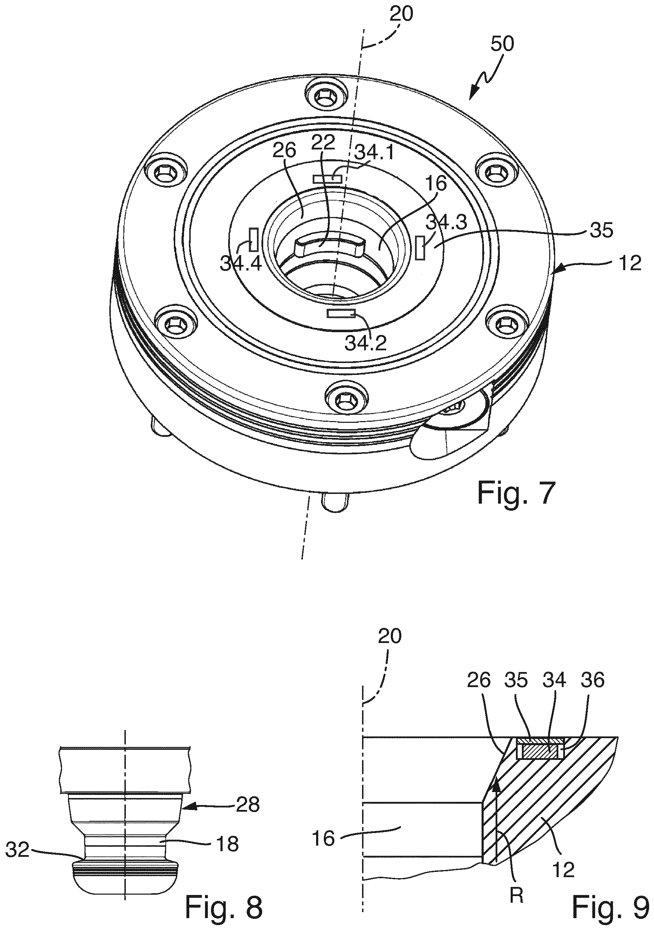

In der Figur 7 ist ein weiteres erfindungsgemäßes Spannmodul 50 gezeigt, wobei dem Spannmodul 10 entsprechende Bauteile mit entsprechenden Bezugszeichen gekennzeichnet sind.

Im Unterschied zum Spannmodul 10 weist das Spannmodul 50 eine Spannaufnahme 16 in Form einer Ausnehmung im Grundkörper 12 auf. In diese Ausnehmung sind die Verriegelungselemente 22 in radialer Richtung einrückbar. In der Spannaufnahme 16 kann ein in Figur 8 dargestelltes Spannelement 18 in Form eines Spannbolzens eingeführt werden. Beim Einführen des Spannelements 18 in die Ausnehmung 16 zentriert sich das Spannelement 18 aufgrund des die Spannaufnahme 16 umgebenden Zentrierkonus 26, der im Schnitt gemäß Figur 9 deutlich zu erkennen ist. Zum Verriegeln des Spannelements 18 werden die Verriegelungselemente 22 nach radial innen verfahren und wirken gegen einen als umlaufende Nut ausgebildeten Einzugsabschnitt 32. Dabei wird das Spannelement 18 mit einer (in der Figur nicht gezeigten) Einzugskraft F in Einzugsrichtung nach unten eingezogen, wodurch die (in der Figur gezeigten) Reaktionskräfte R gegen den Zentrierkonus 26 wirken. Aufgrund der Reaktionskräfte R kommt es zu einer Verformung des Grundkörpers 12; diese Verformung wird, entsprechend der Ausbildung gemäß Spannmodul 10, von an der Oberseite des Grundkörpers 12 vorgesehenen Dehnmesseinrichtungen 34 gemessen. Aus den Messwerten der Dehnmesseinrichtung 34 kann folglich auf die Höhe Reaktionskräfte R bzw. auf die Verteilung der Reaktionskräfte R an der Oberfläche des Grundkörpers 12 rückgeschlossen werden.

## Patentansprüche

1. Stationäres Spannmodul (10, 50) mit einem Grundkörper (12), der eine Oberseite und eine an oder in der Oberseite vorgesehene Spannaufnahme (16) zur Aufnahme eines Spannelements (18) und der Auflageabschnitte (24) zur Auflage des Spannelements (18) aufweist, mit wenigstens zwei im Grundkörper (12) senkrecht zu einer Spannachse (20) bewegbaren Verriegelungselementen (22) zum Einziehen des Spannelements (18) in eine Einzugsrichtung und zur Verriegelung des Spannelements (18) an den Auflageabschnitte (24), **dadurch gekennzeichnet, dass** am Grundkörper (12) wenigstens in oder an der Oberseite des Grundkörpers (12) in axialer Richtung oberhalb jedes Verriegelungselements (22) eine Dehnmesseinrichtung (34) zur Messung einer aus der Verriegelung des Spannelements (18) am Grundkörper (12) resultierenden Verformung des Grundkörpers (12) vorgesehen ist und dass im oder am Grundkörper (12) eine Elektronikeinheit (42) zur Verstärkung und/oder Auswertung der Messsignale der Dehnmesseinrichtungen (34) vorgesehen ist.

2. Spannmodul (10, 50) nach Anspruch 1, **dadurch gekennzeichnet, dass** dem jeweiligen Verriegelungselement (22) und der jeweiligen, in axialer Richtung oberhalb des jeweiligen Verriegelungselements (22) liegende Dehnmesseinrichtung (34.1, 34.2) ein Auflageabschnitt (24) zugeordnet ist, so dass das jeweilige Verriegelungselement (22), die zugehörige Dehnmesseinrichtung (34.1, 34.2) und der zugeordnete Auflageabschnitt (24) in einer durch die Spannachse (20) verlaufenden Schnittebene (E) liegen.

3. Spannmodul (10, 50) nach einem der Ansprüche 1 oder 2, **dadurch gekennzeichnet, dass** zwischen den Dehnmesseinrichtungen (34.1, 34.2), die in axialer Richtung oberhalb jedes Verriegelungselements (22) vorgesehen sind, weitere Dehnmesseinrichtungen (34.3, 34.4) auf der Oberseite des Grundkörpers (12) angeordnet ist.

4. Spannmodul (10, 50) nach einem der Ansprüche 1, 2 oder 3, **dadurch gekennzeichnet, dass** die Oberseite des Grundkörpers (12) eine Ausnehmung (36) zum Einsetzen der der Dehnmesseinrichtungen (34) aufweist.

5. Spannmodul (10, 50) nach einem der vorhergehenden Ansprüche, **dadurch gekennzeichnet, dass** eine Abdeckscheibe (35) zur Abdeckung der Dehnmesseinrichtungen (34) vorgesehen ist.

6. Spannmodul (10, 50) nach einem der vorhergehenden Ansprüche, **dadurch gekennzeichnet, dass** der Grundkörper (12) auf der der Oberseite abgewandten Seiten der Dehnmesseinrichtungen (34) Verformausnehmungen (38) aufweist.

7. Spannmodul (10, 50) nach Anspruch 6, **dadurch gekennzeichnet, dass** die Verformausnehmungen (38) sich in radialer Richtung oder in tangentialer Richtung erstrecken.

8. Spannmodul (10, 50) nach Anspruch 6 oder 7, **dadurch gekennzeichnet, dass** die Verformausnehmungen (38) als Druckluftkanäle ausgebildet sind.

9. Spannmodul (10, 50) nach einem der vorhergehenden Ansprüche, **dadurch gekennzeichnet, dass** die Dehnmesseinrichtungen (34) um die Spannachse (20) herum angeordnet sind.

10. Spannmodul (10, 50) nach einem der vorhergehenden Ansprüche, **dadurch gekennzeichnet, dass** die Spannaufnahme (16) als Ausnehmung und das Spannmittel (18) als ein in die Spannaufnahme (16) eingreifender Bolzen ausgebildet sind, oder dass die Spannaufnahme (16) als Erhebung und das Spannmittel (18) als ein die Erhebung (16) umgebender Spannring ausgebildet sind.

## Claims

1. Stationary clamping unit (10, 50) comprising a main body (12) that has an upper side and a clamping receptacle (16) provided on or in the upper side for receiving a clamping element (18) and has bearing portions (24) for supporting the clamping element (18), comprising at least two locking elements (22) that can be moved within the main body (12) perpendicularly to a clamping axis (20) for pulling the clamping element (18) into a retraction direction and for locking the clamping element (18) on the bearing portions (24), **characterized in that** a strain gauge (34) for measuring a deformation of the main body (12) resulting from the locking of the clamping element (18) on the main body (12) is provided on the main body (12) at least in or on the upper side of the main body (12) in the axial direction above each locking element (22), and **in that** an electronic unit (42) for amplifying and/or evaluating the measurement signals of the strain gauges (34) is provided in or on the main body (12).

2. Clamping unit (10, 50) according to Claim 1, **characterized in that** a bearing section (24) is assigned to the respective locking element (22) and the respective strain gauge (34.1, 34.2) located above the respective locking element (22) in the axial direction such that the respective locking element (22), the associated strain gauge (34.1, 34.2) and the associated bearing section (24) are located in a sectional plane (E) extending through the clamping axis (20).

3. Clamping unit (10, 50) according to either of Claims 1 or 2,
**characterized in that** further strain gauges (34.3, 34.4) are arranged on the upper side of the main body (12) between the strain gauges (34.1, 34.2) provided in the axial direction above each locking element (22).

4. Clamping unit (10, 50) according to any one of Claims 1, 2 or 3, **characterized in that** the upper side of the main body (12) has a recess (36) for the insertion of the strain gauges (34).

5. Clamping unit (10, 50) according to any one of the preceding claims, **characterized in that** a cover plate (35) is provided for covering the strain gauges (34).

6. Clamping unit (10, 50) according to any one of the preceding claims, **characterized in that** the main body (12) has deformation recesses (38) on the sides of the strain gauges (34) facing away from the upper side.

7. Clamping unit (10, 50) according to Claim 6, **characterized in that** the deformation recesses (38) extend in the radial direction or in the tangential direction.

8. Clamping unit (10, 50) according to Claims 6 or 7, **characterized in that** the deformation recesses (38) are designed as compressed air channels.

9. Clamping unit (10, 50) according to any one of the preceding claims, **characterized in that** the strain gauges (34) are arranged around the clamping axis (20).

10. Clamping unit (10, 50) according to any one of the preceding claims, **characterized in that** the clamping receptacle (16) is designed as a recess and the clamping means (18) is designed as a bolt engaging in the clamping receptacle (16), or **in that** the clamping receptacle (16) is designed as an elevation and the clamping means (18) is designed as a clamping ring surrounding the elevation (16).

## Revendications

1. Module de serrage (10, 50) fixe avec un corps de base (12), qui présente une face supérieure et un logement de serrage (16) prévu sur ou dans la face supérieure pour la réception d'un élément de serrage (18) et des parties d'appui (24) pour l'appui de l'élément de serrage (18), avec au moins deux éléments de verrouillage (22) mobiles dans le corps de base (12) perpendiculairement à un axe de serrage (20) pour l'introduction de l'élément de serrage (18) dans une direction d'introduction et pour le verrouillage de l'élément de serrage (18) sur les parties d'appui (24), **caractérisé en ce qu'**un dispositif extensométrique (34) pour la mesure d'une déformation du corps de base (12) résultant du verrouillage de l'élément de serrage (18) sur le corps de base (12) est prévu sur le corps de base (12) au moins dans ou sur la face supérieure du corps de base (12) dans la direction axiale au-dessus de chaque élément de verrouillage (22) et qu'une unité électronique (42) pour l'amplification et/ou l'évaluation des signaux de mesure des dispositifs extensométriques (34) est prévue dans ou sur le corps de base (12).

2. Module de serrage (10, 50) selon la revendication 1, **caractérisé en ce qu'**une partie d'appui (24) est associée à l'élément de verrouillage (22) respectif et au dispositif extensométrique (34.1, 34.2) respectif, situé dans la direction axiale au-dessus de l'élément de verrouillage (22) respectif, de sorte que l'élément de verrouillage (22) respectif, le dispositif extensométrique (34.1, 34.2) correspondant et la partie d'appui (24) associée se situent dans un plan de coupe (E) s'étendant à travers l'axe de serrage (20).

3. Module de serrage (10, 50) selon l'une quelconque des revendications 1 ou 2, **caractérisé en ce que** d'autres dispositifs extensométriques (34.3, 34.4) sont disposés sur la face supérieure du corps de base (12) entre les dispositifs extensométriques (34.1, 34.2), qui sont prévus dans la direction axiale au-dessus de chaque élément de verrouillage (22).

4. Module de serrage (10, 50) selon l'une quelconque des revendications 1, 2 ou 3, **caractérisé en ce que** la face supérieure du corps de base (12) présente un évidement (36) pour l'insertion des des dispositifs extensométriques (34).

5. Module de serrage (10, 50) selon l'une quelconque des revendications précédentes, **caractérisé en ce qu'**un disque de recouvrement (35) est prévu pour le recouvrement des dispositifs extensométriques (34).

6. Module de serrage (10, 50) selon l'une quelconque des revendications précédentes, **caractérisé en ce que** le corps de base (12) présente sur les faces des dispositifs extensométriques (34) opposées à la face supérieure des évidements de déformation (38).

7. Module de serrage (10, 50) selon la revendication 6, **caractérisé en ce que** les évidements de déformation (38) s'étendent dans la direction radiale ou dans la direction tangentielle.

8. Module de serrage (10, 50) selon la revendication 6 ou 7, **caractérisé en ce que** les évidements de déformation (38) sont réalisés sous la forme de canaux d'air comprimé.

9. Module de serrage (10, 50) selon l'une quelconque des revendications précédentes, **caractérisé en ce que** les dispositifs extensométriques (34) sont disposés autour de l'axe de serrage (20).

10. Module de serrage (10, 50) selon l'une quelconque des revendications précédentes, **caractérisé en ce que** le logement de serrage (16) est réalisé sous la forme d'un évidement et le moyen de serrage (18) sous la forme d'un boulon s'insérant dans le logement de serrage (16), ou que le logement de serrage (16) est réalisé sous la forme d'une partie surélevée et le moyen de serrage (18) sous la forme d'une bague de serrage entourant la partie surélevée (16).
